# EUROPÄISCHE PATENTANMELDUNG

(11) **EP 1 191 724 A2**
(43) Veröffentlichungstag der Anmeldung: **27.03.2002**
(21) Anmeldenummer: 01440294.5
(22) Anmeldetag: 11.09.2001
(51) Int. Cl.: H04J 3/16, H04J 14/02

(54) **Verfahren zum optischen Übertragen von SDH- oder SONET-Signalen**

(30) Priorität: 26.09.2000 DE 10047511
(71) Anmelder: ALCATEL, 75008 Paris (FR)
(72) Erfinder: Grammel, Gert, 73066 Uhingen (DE)
(74) Vertreter: Menzietti, Domenico, Dipl.-Ing

(57) **Zusammenfassung**

Bei der Übertragung von SDH-Signalen mittels WDM werden mehrere SDH-Signale auf mehrere Wellenlängen derart verteilt, dass für jedes SDH-Signal jeweils eine Wellenlänge verwendet wird. Anstatt ein SDH-Signal, z.B. STM-1, STM-4, STM-16, STM-64, direkt auf eine Wellenlänge zu modulieren, werden erfindungsgemäß mehrere SDH-Signale zusammengemischt, mit Zusatzinformation versehen und auf die verfügbaren Wellenlängen verteilt. In einer Vorrichtung zum optischen Übertragen von SDH-Signalen ist ein Cross-Connect (0-CC) und eine Steuereinheit (DSP) sowie eine optischer Umsetzer (U) vorgesehen, um die Verteilung durchzuführen.

## Beschreibung

Die Erfindung betrifft ein Verfahren zum optischen Übertragen von SDH-oder SONET-Signalen.

Bei der leitungsgebundenen Signalübertragung werden immer höhere Bandbreiten gefordert, um mit der erwarteten Explosion des Bandbreitebedarfs, insbesondere hervorgerufen durch Internetdienste, Schritt halten zu können. Eine vielversprechende Technologie ist dabei DWDM, die es ermöglicht, optische Signale auf unterschiedlichen Wellenlängen über eine einzige Glasfaser zu übertragen; DWDM=Dense Wavelength Division Multipexing. DWDM wird z.B. zum leitungsgebundenen, optischen Übertragen von SDH-Signalen verwendet. Ein SDH-Signal ist beispielsweise ein STM-1 oder ein STM-4 Signal. Das SDH-Signal ist elektrisch. Es wird elektrisch/optisch in eine bestimmte Wellenlänge umgesetzt. Mehrere SDH-Signale werden auf mehrere Wellenlängen derart verteilt, dass für jedes SDH-Signal jeweils eine Wellenlänge verwendet wird. Auf der Wellenlänge findet beispielsweise eine einfache Basisbandübertragung statt. Alle Wellenlängen werden dann im Wellenlängenmultiplex gemeinsam über eine optische Leitung übertragen. Auch für SDH-Signale mit einer niedrigen Bitrate wird jeweils eine Wellenlänge verwendet. Die freie Kapazität einer durch ein SDH-Signal mit einer niedrigen Bitrate belegten Wellenlänge kann nicht zusätzlich genutzt werden. Die Gesamtkapazität der verfügbaren Wellenlängen wird somit nicht in einer optimalen Art und Weise ausgenutzt. Ist zudem eine bestimmte Wellenlänge gestört, so ist das über sie übertragene SDH-Signal ebenfalls gestört und kann folglich nicht störungsfrei übertragen werden. Die Störung oder eine erhöhte Dämpfung einer Wellenlänge wird z.B. hervorgerufen durch die Verwendung unterschiedlicher Fasern und/oder Verstärker. Die Störung oder erhöhte Dämpfung kann zu erhöhten Bitfehlerraten führen, was die Nutzung der entsprechenden Wellenlänge für Übertragungszwecke einschränken kann. Zudem ist bei Ausfall eines Lasers, der eine bestimmte Wellenlänge generiert, die Verbindung komplett gestört. Ferner muss der verfügbare Wellenlängenbereich pro Verbindung individuell ausgemessen werden. Des weiteren kann die Verschlechterung des Übertragungsverhaltens einer oder mehrerer Wellenlängen im optischen WDM-Equipment nicht direkt gemessen werden, da eine Auswertung von Fehlerraten nur im dahinterliegenden elektrischen SDH-Equipment durchgeführt werden kann.

Aufgabe der Erfindung ist es, ein Verfahren oder eine Vorrichtung oder ein System zum optischen Übertragen von SDH- oder SONET-Signalen zur Verfügung zu stellen, das bzw. die gegenüber dem Stand der Technik optimiert ist.

Gelöst wird diese Aufgabe durch ein Verfahren gemäß Patentanspruch 1 und eine Vorrichtung gemäß Patentanspruch 4 und ein System nach Patentanspruch 7.

Anstatt ein SDH-Signal, z.B. STM-1, STM-4, STM-16, STM-64, direkt auf eine Wellenlänge zu modulieren, werden mehrere SDH-Signale zusammengemischt, mit Zusatzinformation versehen und auf die verfügbaren Wellenlängen verteilt. Die Verteilung erfolgt derart, dass die verfügbare optische Kapazität optimiert ausgenutzt wird. Die Zusatzinformation wird z.B. in Form eines sogenannten Overhead, d.h. eines Kopfteils, eingefügt. Anhand des Overhead kann dann auf der Empfangsseite eines WDM- oder DWDM-Systems die Übertragungsqualität jeder einzelnen Wellenlänge gemessen werden. Verschlechtert sich das Übertragungsverhalten, können für eine individuelle Wellenlänge oder für mehrere Wellenlängen höhere Aussteuerungen gewählt werden. Durch die höhere Aussteuerung wird die übertragbare Datenrate entsprechend geringer. Ein zentraler Steuermechanismus sorgt dafür, dass alle Wellenlängen entsprechend ihrer Datenrate mit Daten beaufschlagt werden. Der Ausfall einer Wellenlänge erzeugt lediglich eine höhere Bitfehlerrate und nicht den Ausfall des komplette Signals. Solange die Übertragungskapazität der verbleibenden Wellenlängen ausreicht, kann das WDM- oder DWDM-System selbstständig die geforderte Übertragungsqualität wieder herstellen.

Die Zusatzinformation kann Informationen über eine Fehlerkorrektur, z.B. für eine Forward Error Correction (FEC), beinhalten. Durch die Verwendung von FEC-Mechanismen kann die Fehlerrate minimiert werden.

Durch die Anwendung des Stuermechanismus und des FEC-Mechanismus kann erreicht werden, dass preisgünstige Laser eingesetzt werden können.

Das erfindungsgemäße (D)WDM-System passt sich selbständig an die Übertragungsbedingungen an. Es kann auf einfache Art und Weise installiert werden. Der Ausfall einer Wellenlänge führt nicht zu einer Unterbrechung einer Verbindung. Beeinträchtigungen der Übertragungsqualität werden während des Betriebs erkannt und können automatisch ausgeglichen werden.

Die Bandbreite pro Applikation ist nur durch die Anzahl der Wellenlängen und das Übertragungsverhalten der Strecke beschränkt. Die verfügbare Übertragungsbandbreite wird besser ausgenutzt, da z.B. eine hochwertige Wellenlänge nicht ausschließlich durch die Belegung mit einer niederbitratigen Verbindung erfolgt.

Die Vorteile liegen nicht nur in der Störunempfindlichkeit, sondern vor allem in der automatischen Anpassung an das verfügbare optische Fenster und der Möglichkeit auf Ausfälle reagieren zu können. Auf Grund der on-line Überwachung kann das (D)WDM-System prompt reagieren. Es ist selbstheilend, indem es selbstständig und automatisch eine Umverteilung der Daten auf die Wellenlängen durchführt.

Im folgenden wird ein Ausführungsbeispiel der Erfindung unter Zuhilfenahme von drei Figuren erläutert. Es zeigen:
- Fig. 1: eine schematische Darstellung einer erfindungsgemäßen Vorrichtung zur leitungsgebundenen, optischen Übertragung von SDH-Signalen mittels DWDM,
- Fig. 2: ein Diagramm für zu übertragende SDH-Signale und
- Fig. 3: ein Diagramm für eine Signalverteilung auf einer optischen Übertragungsleitung.

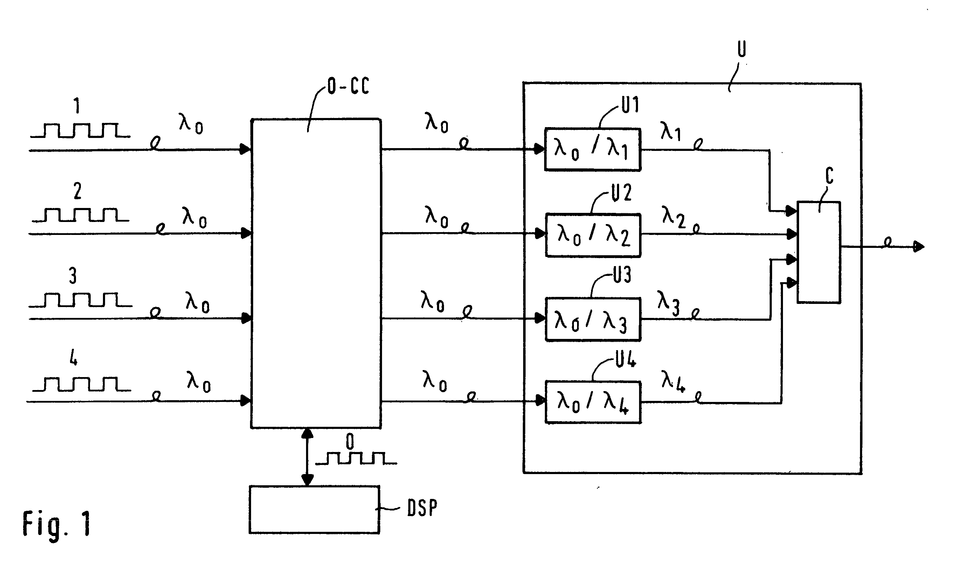

Die erfindungsgemäße Vorrichtung in Fig. 1 hat einen Cross-Connect O-CC mit vier Eingängen und vier Ausgängen sowie einem Steuerein-/ausgang. Der Steuerein-/ausgang ist mit einer Steuereinheit DSP verbunden, die als Digitaler Signal Prozessor ausgebildet ist. Die Ausgänge sind mit einem optischen Umsetzer U verbunden, der vier Eingänge und einen Ausgang aufweist.

Der Cross-Connect O-CC ist als optischer Cross-Connect mit einem elektrischen Steuereingang ausgelegt. Jeder Eingang des Cross-Connect O-CC kann mit jedem Ausgang des Cross-Connect O-CC verbunden werden. Jedes an einem Eingang anliegende Datenpaket, im Minimalfall jedes Bit, kann somit zu jedem Ausgang weitergeleitet werden.

Am ersten Eingang des Cross-Connect O-CC liegt ein erstes, mit der Ziffer 1 bezeichnetes SDH-Signal an. Das SDH-Signal ist bereits elektrisch/optisch umgesetzt und ist auf die Wellenlänge λ₀ moduliert. Das SDH-Signal ist beispielsweise ein STM-1 Signal, das eine Datenrate von 155Mbit/s erfordert.

Am zweiten Eingang des Cross-Connect O-CC liegt ein zweites, mit der Ziffer 2 bezeichnetes SDH-Signal an. Das SDH-Signal ist bereits elektrisch/optisch umgesetzt und ist auf die Wellenlänge λ₀ moduliert. Das SDH-Signal ist beispielsweise ein STM-1 Signal, das eine Datenrate von 155Mbit/s erfordert.

Am dritten Eingang des Cross-Connect O-CC liegt ein drittes, mit der Ziffer 3 bezeichnetes SDH-Signal an. Das SDH-Signal ist bereits elektrisch/optisch umgesetzt und ist auf die Wellenlänge λ₀ moduliert. Das SDH-Signal ist beispielsweise ein STM-1 Signal, das eine Datenrate von 155Mbit/s erfordert.

Am vierten Eingang des Cross-Connect O-CC liegt ein viertes, mit der Ziffer 4 bezeichnetes SDH-Signal an. Das SDH-Signal ist bereits elektrisch/optisch umgesetzt und ist auf die Wellenlänge λ₀ moduliert. Das SDH-Signal ist beispielsweise ein STM-1 Signal, das eine Datenrate von 155Mbit/s erfordert.

Die Steuereinheit DSP dient insbesondere dazu, die Verteilung der SDH-Signale auf die Ausgänge des Cross-Connect O-CC zu steuern. Die Steuereinheit DSP liefert Zusatzinformationen, die ebenfalls zu den Ausgängen des Cross-Connect O-CC weitergeleitet werden. Die Zusatzinformationen enthalten insbesondere Informationen über die Verteilung der SDH-Signale auf die Wellenlängen. Auf der Empfangsseite kann dann aus diesen Informationen eine Rückumsetzung zur Wiedergewinnung der einzelnen SDH-Signale erfolgen. Zusätzlich zu den Informationen über die Verteilung können die Zusatzinformationen Informationen für eine Fehlerkorrektur, z.B. eine sogenannte Forward Error Correction, enthalten. Diese Informationen werden in der Steuereinheit DSP generiert und mit den SDH-Signalen übertragen. Auf der Empfangsseite kann mittels dieser Informationen dann beispielsweise eine Bitfehlermessung durchgeführt werden. Das Ergebnis der Bitfehlermessung wird z.B. zur Steuereinheit DSP übertragen. In der Steuereinheit findet dann in Abhängigkeit vom Ergebnis der Bitfehlermessung ein geeignete Umverteilung der Signale statt. Die Zusatzinformationen werden in der Steuereinheit DSP elektrisch generiert und über einen Elektrisch/Optisch-Umsetzer in optische Signale umgesetzt, die dem Cross-Connect O-CC zugeführt werden. Die Zuführung erfolgt beispielsweise über einen fünften Eingang des Cross-Connect O-CC. Alternativ werden die Zusatzinformationen in der Steuereinheit elektrisch generiert, über einen elektrischen Multiplexer mit zu übertragenden elektrischen SDH-Signale gemultiplext und zusammen mit diesen elektrisch/optisch umgesetzt und dem Cross-Connect O-CC über einen der vier Eingänge zugeführt. Die Zusatzinformationen haben im Vergleich zu den SDH-Signalen eine geringe Datenrate.

Der optische Umsetzer U dient dazu, die Ausgangssignale des Cross-Connects O-CC in ein Wellenlängenmultiplexsignal umzusetzen, das über eine optische Leitung zu einer Empfangseinrichtung übertragen wird. Die Ausgangssignale des Cross-Connects O-CC werden alle mit der gleichen Wellenlänge λ₀ übertragen. Der optische Umsetzer beinhaltet vier Wellenlängenumsetzer U1, U2, U3, U4. Der Wellenlängenumsetzer U1 dient der Umsetzung der Ausgangsignale des ersten Ausgangs des Cross-Connects O-CC von der Wellenlänge λ₀ auf die Wellenlänge λ₁. Der Wellenlängenumsetzer U2 dient der Umsetzung der Ausgangsignale des zweiten Ausgangs des Cross-Connects O-CC von der Wellenlänge λ₀ auf die Wellenlänge λ₂. Der Wellenlängenumsetzer U3 dient der Umsetzung der Ausgangsignale des dritten Ausgangs des Cross-Connects O-CC von der Wellenlänge λ₀ auf die Wellenlänge λ₃. Der Wellenlängenumsetzer U4 dient der Umsetzung der Ausgangsignale des vierten Ausgangs des Cross-Connects O-CC von der Wellenlänge λ₀ auf die Wellenlänge λ₄. In einem optischen Kombiner C werden die vier Wellenlängen λ₁ bis λ₄ dann überlagert, so dass am Ausgang des optischen Umsetzers ein DWDM-Signal entsteht.

Die vier SDH-Signale an den Eingängen des Cross-Connects O-CC werden durch den Cross-Connect O-CC und die Steuereinheit DSP derart aufgeteilt, dass eine optimale Ausnutzung der verfügbaren Wellenlängenkapazität erfolgt.

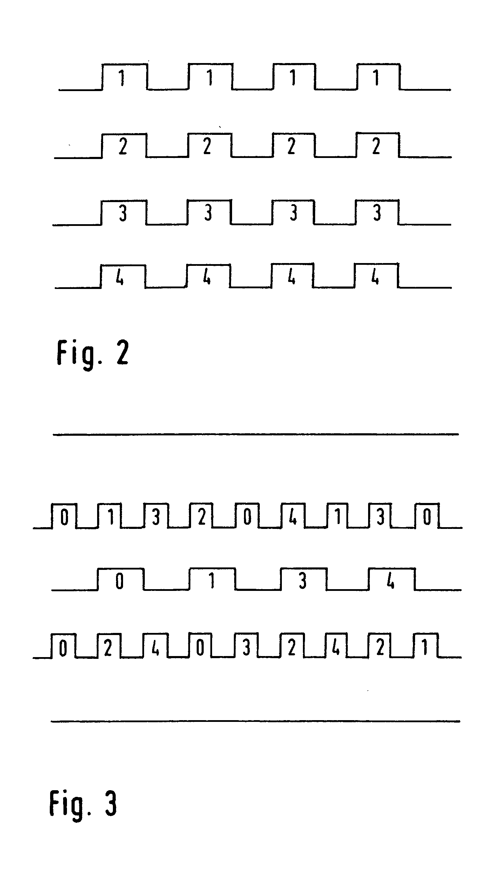

In Fig. 2 sind beispielhaft die vier zu übertragenden SDH-Signale dargestellt. Das SDH-Signal am ersten Eingang des Cross-Connects O-CC ist mit der Ziffer 1 versehen. Das SDH-Signal am zweiten Eingang des Cross-Connects O-CC ist mit der Ziffer 2 versehen. Das SDH-Signal am dritten Eingang des Cross-Connects O-CC ist mit der Ziffer 3 versehen. Das SDH-Signal am vierten Eingang des Cross-Connects O-CC ist mit der Ziffer 4 versehen.

In Fig. 3 sind beispielhaft die verteilten SDH-Signale an den Ausgängen des Cross-Connects O-CC zusammen mit den Zusatzinformationen dargestellt. Die vier SDH-Signale sind wie in Fig. 2 mit den Ziffern 1-4 versehen. Die Zusatzinformationen sind mit der Ziffer 0 versehen. Die Übertragungskapazität einer Wellenlänge liegt z.B. im Bereich von 2,5 bis 10 Gbit/s. Die Wellenlänge λ₁ ist beispielsweise auf der Übertragungsstrecke zur Empfangeinrichtung ungestört. Sie kann daher zur hochbitratigen Übertragung verwendet werden. Die Wellenlänge λ₁ wird beispielsweise zur Übertragung derjenigen Zusatzinformationen verwendet, die die Informationen über die Verteilung beinhalten. Diese Zusatzinformationen werden z.B. alle vier Bit oder alle vier Byte oder in vorgegebenen, der Empfangseinrichtung bekannten Zeitabständen übertragen. Dadurch wird die Auswertung auf der Empfangsseite vereinfacht. Fig. 3 zeigt daher im ersten Ausgangssignal des Cross-Connects O-CC alle vier Zeiteinheiten eine mit Ziffer 0 gekennzeichnetes Datenpaket. Die Datenpakete der SDH-Signale werden nach einem Steuermechanismus, der in die Steuereinheit DSP z.B. mittels Software einprogrammiert ist, verteilt. Im ersten Ausgangssignal des Cross-Connects O-CC sind Datenpakete aller vier SDH-Signale 1-4 enthalten. Die auf der Wellenlänge λ₁ verfügbare Datenrate ist höher als die Datenrate der vier SDH-Signale, so dass zumindest Teile dieser gemultiplext über diese eine Wellenlänge übertragen werden können. Die Wellenlänge λ₂ ist beispielsweise auf der Übertragungsstrecke zur Empfangseinrichtung gestört. Sie kann daher z.B. nur zur Übertragung mit einer Bitrate verwendet werden, die halb so hoch ist wie die Bitrate der Wellenlänge λ₁. Im zweiten Ausgangssignal des Cross-Connects O-CC sind Datenpakete der SDH-Signale 1, 3 und 4 enthalten sowie Zusatzinformationen, die Informationen über eine Fehlerkorrektur beinhalten. Die Wellenlänge λ₃ ist beispielsweise auf der Übertragungsstrecke zur Empfangeinrichtung ungestört. Sie kann daher zur hochbitratigen Übertragung verwendet werden. Im dritten Ausgangssignal des Cross-Connects O-CC sind Datenpakete aller SDH-Signale 1-4 enthalten sowie Zusatzinformationen, die Informationen über eine Fehlerkorrektur und/oder Maintenanceinformationen und/oder Überwachungsinformationen beinhalten. Die Wellenlänge λ₄ ist beispielsweise auf der Übertragungsstrecke zur Empfangeinrichtung derart gestört, dass sie für eine Datenübertragung nicht verwendet werden kann. Im vierten Ausgangssignal des Cross-Connects O-CC sind daher weder Datenpakete noch Zusatzinformationen enthalten. Mittels drei Wellenlängen können somit die vier SDH-Signale übertragen werden. Ändern sich die Umstände, z.B. Ausfall von Wellenlänge λ₁ und ungestörte Wellenlängen λ₂ bis λ₄, so wird die Steuereinheit DSP eine Umverteilung eigenständig vornehmen. Da nun die Wellenlänge λ₁ nicht mehr zur Übertragung von Zusatzinformationen genutzt werden kann, wird die zweite Wellenlänge λ₂ für die Übertragung der Zusatzinformationen, zumindest der die Verteilungsinformation beinhaltenden Zusatzinformation, verwendet. Die vier SDH-Signale werden entsprechend auf die drei Wellenlängen λ₂ bis λ₄ aufgeteilt. Die Aufteilung erfolgt vorzugsweise derart, dass auf jeder Wellenlänge annähernd die gleiche Datenmenge übertragen wird. Im Ausführungsbeispiel sind vier STM-1 SDH-Signale zu übertragen. Jedes STM-1 Signal hat eine Datenrate von 155 Mbit/s. Vier STM-1 Signale haben daher eine Datenrate von 620 Mbit/s. In diesem Fall können auch alle vier SDH-Signale mit einer Wellenlänge übertragen werden. Die vier Signale werden dann z.B. gemultiplext über die Wellenlänge λ₁ übertragen. Die restlichen drei Wellenlängen können dann für die Übertragung weiterer SDH-Signale verwendet werden.

Auf der Empfangsseite hat die Empfangseinrichtung eine zur Vorrichtung nach Fig. 1 inverse Struktur. Die Empfangseinrichtung beinhaltet z.B. einen optischen Umsetzer, der einen wellenlängenselektiven, optischen Splitter und vier Wellenlängenumsetzer beinhaltet. Der Splitter empfängt das DWDM-Signal über die optische Leitung und teilt es in die vier Wellenlängen auf. Jede Wellenlänge wird in einem Wellenlängenumsetzer in die Wellenlänge λ₀ umgesetzt. Der optische Umsetzer hat vier Ausgänge, die mit vier Eingängen eines Cross-Connect verbunden werden. Der Cross-Connect hat vier Ausgänge zur Bereitstellung der vier übertragenen SDH-Signale sowie eine Schnittstelle zu einer Steuereinheit, die z.B. als Digitaler Signal Prozessor ausgeführt ist. Die Steuereinheit ermittelt aus den Zusatzinformationen, die in vorgegebenen, der Steuereinheit bekannten Zeitabständen übertragen werden, den Verteilungsschlüssel und steuert den Cross-Connect derart, dass die zugehörigen Datenpakete zu den zugehörigen Ausgängen des Cross-Connects geschaltet werden. Gegebenenfalls ist ein Zwischenspeicher erforderlich. Die Steuereinheit ist ferner geeignet, eine Bitfehlermessung für jede Wellenlänge durchzuführen. Stellt die Steuereinheit fest, dass die Übertragung auf einer Wellenlänge gestört ist, so informiert sie die Steuereinheit der Vorrichtung in Fig. 1 auf der Sendeseite. Das Informieren erfolgt z.B. über eine elektrische oder optische Verbindung zur Vorrichtung. Die optische Leitung zwischen Vorrichtung und Empfangseinrichtung kann auch bidirektional ausgelegt sein, so dass über ein und dieselbe Leitung optische Signale von der Vorrichtung zur Empfangseinrichtung und von der Empfangseinrichtung zur Vorrichtung übertragen werden können. Die Empfangseinrichtung beinhaltet zusätzlich eine Sendeeinrichtung zur Einspeisung der zu übertragenden optischen Signale in die optische Leitung. Bei einem bidirektionalen Betrieb kann z.B. sowohl auf der Sendeseite als auch auf der Empfangsseite eine Vorrichtung beinhaltend zwei Cross-Connects, eine Steuereinheit und zwei optische Umsetzer installiert werden. Ein Cross-Connect dient dann der Übertragung von SDH-Signalen, der andere Cross-Connect dem Empfang von SDH-Signalen. Die Steuereinheit steuert beide Cross-Connects. Die Informationen über die Bitfehlermessung in der Hinrichtung können zusammen mit den Zusatzinformationen in der Rückrichtung übertragen werden.

Im Ausführungsbeispiel hat der Cross-Connect vier Eingänge und vier Ausgänge. Diese Zahlen sind beispielhaft gewählt. Der Cross-Connect kann auch mehr oder weniger Ein- oder Ausgänge aufweisen; auch kann die Anzahl der Ein- und Ausgänge unterschiedlich sein. Die Mindestanzahl von Eingängen für einen Cross-Connect ist zwei. Die Mindestanzahl von Ausgängen für einen Cross-Connect ist zwei.

Statt eines elektrisch gesteuerter optischen Cross-Connect kann auch ein rein optischer Cross-Connect verwendet werden. Dann wird auch die Steuerung über eine optische Schnittstelle vorgenommen. Die Steuereinheit ist dann selbst rein optisch oder hat zumindest eine optische Schnittstelle. Alternative kann der Cross-Connect auch als elektrischer Cross-Connect ausgeführt sein. Die SDH-Signale werden dem Cross-Connect dann elektrisch zugeführt und im Cross-Connect elektrisch verteilt. Die Ausgänge des Cross-Connect sind mit einem Elektrisch/Optisch-Umsetzer verbunden, der jeden Ausgang elektrisch/optisch umsetzt. Alle optischen Ausgangssignale haben dann z.B. die gleiche Wellenlänge. An den Elektrisch/Optisch-Umsetzer schließt sich dann der optische Umsetzer an, zur Umsetzung und Kombination der Wellenlängen.

Als Steuereinheit kann statt eines Digitalen Signal Prozessors auch ein Mikroprozessor oder ein entsprechend programmierter Baustein verwendet werden. Der Baustein ist z.B. ein sog. FPGA.

Anstatt auf ein DWDM-System kann die Erfindung auch auf ein WDM-System entsprechend angewendet werden. Anstatt SDH-Signale können auch SONET-Signale entsprechend übertragen werden. Anstatt STM-1 Signale können auch STM-4, STM-16, STM-64 Signale oder dergleichen entsprechend übertragen werden. Es ist auch möglich, mit ein und demselben Cross-Connect SDH-Signale unterschiedlicher Bitraten, also z.B.

STM-1 und STM-4 Signale oder STM-1, STM-4 und STM-16 Signale oder STM-16 und STM-64 Signale, zu übertragen.

Im einfachsten Anwendungsfall multiplext der Cross-Connect zwei SDH-Signale und überträgt sie gemeinsam über eine Wellenlänge.

Anstelle einer optischen Leitung können auch mehrere verwendet werden. Die mehreren optischen Leitungen können dann z.B. auf mindestens zwei unterschiedliche Übertragungsstrecken aufgeteilt werden zum Generieren von mindestens zwei unabhängigen Pfaden. Tritt auf einer Strecke ein Kabelbruch auf, z.B. auf Grund von Baggerarbeiten, so können die zu übertragenden Signale derart umverteilt werden, dass sie über eine andere Strecke übertragen werden, auf der keine Beeinträchtigung vorliegt. Anstelle zu einer Empfangseinrichtung können die optischen SDH-Signale auch zu mehreren Empfangseinrichtungen übertragen werden. Dazu wird z.B. ein Verteilnetz aus optischen Leitungen und optischen Splittenn verwendet. Anstelle eines Verteilnetzes kann auch ein Maschennetz oder ein Ringnetz verwendet werden.

Anstelle auf SDH- oder SONET-Signale kann die Erfindung auch auf andere digitale Signale wie z.B. GigabitEthernet oder ATM-Signale angewendet werden. SDH- und SONET-Signale werden synchron übertragen. Ein Multiplexing ist daher einfach möglich. GigabitEthernet und ATM-Signale werden asynchron übertragen. Sie sind weder untereinander noch zu den SDH/SONET-Signalen synchron. In diesem Fall ist eine zusätzliche Anpassung notwendig. Die für die Anpassung erforderliche Adaptionsfunktion stellt z.B. für die optische Übertragung eine Synchronisation zur Verfügung.

## Patentansprüche

1. Verfahren zum leitungsgebundenen, optischen Übertragen von SDH- oder SONET-Signalen, **gekennzeichnet durch** folgende Schritte:
- Verteilen der zu übertragenden SDH- bzw. SONET-Signale über eine Anzahl von verfügbaren Wellenlängen und Hinzufügen von Zusatzinformationen beinhaltend Informationen über die Verteilung, wobei eine erste Wellenlänge zur Übertragung mindestens eines Teils eines ersten SDH-Signals und mindestens eines Teils eines zweiten SDH-Signals dient und
- Übertragen der Wellenlängen im Multiplexverfahren über mindestens eine optische Leitung.

2. Verfahren nach Anspruch 1, **dadurch gekennzeichnet, dass** nach Erhalt von Informationen über die Übertragungsqualität der optischen Leitung in Abhängigkeit von den Informationen eine Umverteilung durchgeführt wird.

3. Verfahren nach Anspruch 1, **dadurch gekennzeichnet, dass** die Zusatzinformationen Informationen für eine Fehlerkorrektur beinhalten.

4. Verfahren nach Anspruch 1, **dadurch gekennzeichnet, dass** anstelle der SDH- oder SONET-Signale andere synchrone oder asynchrone Signale optisch übertragen werden, und dass im Fall der asynchronen Signale vor dem Verteilen eine Synchronisation durchgeführt wird.

5. Vorrichtung zur leitungsgebundenen, optischen Übertragung von SDH-oder SONET-Signalen,
**dadurch gekennzeichnet,**
**dass** ein Cross-Connect (O-CC) mit mindestens zwei Eingängen und mindestens zwei Ausgängen vorgesehen ist, um die zu übertragenden SDH-Signale aufzuteilen, wobei eine Steuereinheit (DSP) vorgesehen ist, die die Verteilung steuert und Zusatzinformationen hinzufügt, die Informationen über die Verteilung beinhalten.

6. Vorrichtung nach Anspruch 4, **dadurch gekennzeichnet, dass** der Cross-Connect (O-CC) als elektrisch gesteuerter optischer Cross-Connect, als rein optischer Cross-Connect oder als elektrischer Cross-Connect ausgeführt ist.

7. Vorrichtung nach Anspruch 4, **dadurch gekennzeichnet, dass** dem Cross-Connect (O-CC) ein optischer Umsetzer (U) nachgeschaltet ist, der der Umsetzung in mindestens zwei unterschiedliche Wellenlängen dient und der Kombinierung dieser Wellenlängen.

8. System zur leitungsgebundenen, optischen Übertragung von SDH- oder SONET-Signalen
**dadurch gekennzeichnet,**
**dass** das System eine Vorrichtung nach Anspruch 4 beinhaltet, eine Empfangseinrichtung und mindestens eine optische Leitung zum Verbinden der Vorrichtung mit der Empfangseinrichtung, dass die Empfangseinrichtung einen Cross-Connect und eine Steuereinheit aufweist, wobei die Steuereinheit geeignet ist, die Information über die Verteilung zu selektieren und auszuwerten und eine Verteilung der empfangenen Signale derart durchzuführen, das die Ausgangssignale des Cross-Connects mit den Eingangssignalen des Cross-Connects der Vorrichtung korrespondieren.

9. System nach Anspruch 7, **dadurch gekennzeichnet, dass** ein optischer Umsetzer vorgesehen ist, der dem Cross-Connect vorgeschaltet ist, und zum Splitten und zur Umsetzung der gesplitteten empfangenen Signale in ein und dieselbe Wellenlänge dient.

10. System nach Anspruch 7, **dadurch gekennzeichnet, dass** in der Empfangseinrichtung eine Bitfehlermessung durchgeführt wird und das Ergebnis dieser Bitfehlermessung zur Vorrichtung übertragen wird, die abhängig vom Ergebnis eine Umverteilung der SDH- bzw. SONET-Signale durchführt.
